(19) Europäisches Patentamt
European Patent Office
Office européen des brevets

(11) **EP 3 668 097 A1**

(12) **EUROPEAN PATENT APPLICATION**

(43) Date of publication:
**17.06.2020 Bulletin 2020/25**

(51) Int Cl.:
**H04N 19/13** (2014.01)          **H04N 19/577** (2014.01)
**H04N 19/154** (2014.01)          **H04N 19/176** (2014.01)

(21) Application number: **18306689.3**

(22) Date of filing: **13.12.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **InterDigital VC Holdings, Inc.**
**Wilmington, DE 19809 (US)**

(72) Inventors:
• **LELEANNEC, Fabrice**
  **35576 Cesson-Sévigné (FR)**
• **BORDES, Philippe**
  **35576 Cesson-Sévigné (FR)**
• **RACAPE, Fabien**
  **35576 Cesson-Sévigné (FR)**

(74) Representative: **Huchet, Anne**
**InterDigital CE Patent Holdings**
**20, rue Rouget de Lisle**
**92130 Issy-les-Moulineaux (FR)**

(54) **GENERALIZED BI-PREDICTION INDEX CODING**

(57)    At least a method and an apparatus for coding video are presented for improving information used in generalized bi-prediction (GBi). For example, first and second predictor are obtained for a block of a picture using first and second reference pictures, respectively. The first predictor and the second predictor are used for forming a third predictor for the block of the picture in bi-prediction inter prediction, wherein the third predictor is obtained as a weighted average of the first and second predictors, by applying first and second weights to the first and second predictors, respectively. The first weight is selected from a set of weight values, and the second weight is derived from the first weight value. The set of weight values are entropy coded based on, for example, whether picture quality of the first reference picture is higher than the second reference picture.

**FIG. 6**

**Description**

TECHNICAL FIELD

The present embodiments generally relate to a method and an apparatus for video encoding or decoding, and more particularly, to a method and an apparatus for efficiently coding and decoding of information used in generalized bi-prediction (GBi).

BACKGROUND

To achieve high compression efficiency, image and video coding schemes usually employ prediction and transform to leverage spatial and temporal redundancy in the video content. Generally, intra or inter prediction is used to exploit the intra or inter frame correlation, then the differences between the original block and the predicted block, often denoted as prediction errors or prediction residuals, are transformed, quantized, and entropy coded. To reconstruct the video, the compressed data are decoded by inverse processes corresponding to the entropy coding, quantization, transform, and prediction.

SUMMARY

According to an embodiment, a method for video encoding is presented, comprising: obtaining a first predictor for a block of a picture using a first reference picture; obtaining a second predictor for the block of the picture using a second reference picture; using the first predictor and the second predictor for forming a third predictor for the block of the picture in bi-prediction inter prediction, wherein the third predictor is obtained as a weighted average of the first predictor and the second predictor by applying a first weight to the first predictor and applying a second weight to the second predictor, the first weight being selected from a set of weight values; and entropy coding the set of weight values based on whether picture quality of the first reference picture is higher than the second reference picture.

According to another embodiment, a method for video decoding is presented, comprising: obtaining a first predictor for a block of a picture using a first reference picture; obtaining a second predictor for the block of the picture using a second reference picture; using the first predictor and the second predictor for forming a third predictor for the block of the picture in bi-prediction inter prediction, wherein the third predictor is obtained as a weighted average of the first predictor and the second predictor by applying a first weight to the first predictor and applying a second weight to the second predictor, the first weight being selected from a set of weight values; and entropy decoding the set of weight values based on whether picture quality of the first reference picture is higher than the second reference picture.

According to another embodiment, an apparatus for video encoding is presented, comprising: means for obtaining a first predictor for a block of a picture using a first reference picture; means for obtaining a second predictor for the block of the picture using a second reference picture; means for using the first predictor and the second predictor for forming a third predictor for the block of the picture in bi-prediction inter prediction, wherein the third predictor is obtained as a weighted average of the first predictor and the second predictor by applying a first weight to the first predictor and applying a second weight to the second predictor, the first weight being selected from a set of weight values; and means for entropy coding the set of weight values based on whether picture quality of the first reference picture is higher than the second reference picture.

According to another embodiment, an apparatus for video decoding is presented, comprising: means for obtaining a first predictor for a block of a picture using a first reference picture; means for obtaining a second predictor for the block of the picture using a second reference picture; means for using the first predictor and the second predictor for forming a third predictor for the block of the picture in bi-prediction inter prediction, wherein the third predictor is obtained as a weighted average of the first predictor and the second predictor by applying a first weight to the first predictor and applying a second weight to the second predictor, the first weight being selected from a set of weight values; and means for entropy decoding the set of weight values based on whether picture quality of the first reference picture is higher than the second reference picture.

According to another embodiment, an apparatus for video encoding is presented, comprising one or more processors, wherein said one or more processors are configured to: obtain a first predictor for a block of a picture using a first reference picture; obtain a second predictor for the block of the picture using a second reference picture; use the first predictor and the second predictor for forming a third predictor for the block of the picture in bi-prediction inter prediction, wherein the third predictor is obtained as a weighted average of the first predictor and the second predictor by applying a first weight to the first predictor and applying a second weight to the second predictor, the first weight being selected from a set of weight values; and entropy code the set of weight values based on whether picture quality of the first reference picture is higher than the second reference picture. The apparatus may further comprise one or more memories coupled to said one or more processors.

According to another embodiment, an apparatus for video decoding is presented, comprising one or more processors, wherein said one or more processors are configured to obtain a first predictor for a block of a picture using a first reference picture; obtain a second predictor for the block of the picture using a second reference picture; use the first predictor and the second predictor for forming a third predictor for the block of the picture in bi-prediction inter prediction, wherein the third predictor is obtained as a weighted average of the first predictor and the second predictor by applying a first weight to the first predictor and applying a second weight to the second predictor, the first weight being selected from a set of weight values; and entropy decode the set of weight values based on whether picture quality of the first reference picture is higher than the second reference picture. The apparatus may further comprise one or more memories coupled to said one or more processors.

According to another embodiment, a signal comprising encoded video is formed by performing obtaining a first predictor for a block of a picture using a first reference picture; obtaining a second predictor for the block of the picture using a second reference picture; using the first predictor and the second predictor for forming a third predictor for the block of the picture in bi-prediction inter prediction, wherein the third predictor is obtained as a weighted average of the first predictor and the second predictor by applying a first weight to the first predictor and applying a second weight to the second predictor, the first weight being selected from a set of weight values; and entropy coding the set of weight values based on whether picture quality of the first reference picture is higher than the second reference picture.

BRIEF DESCRIPTION OF THE DRAWINGS

FIG. 1 illustrates a block diagram of an embodiment of a video encoder.

FIG. 2 illustrates a block diagram of an embodiment of a video decoder.

FIG. 3 is a pictorial example illustrating intra mode prediction.

FIG. 4 is a pictorial example illustrating inter mode prediction.

FIG. 5 illustrates using temporal identifiers to infer quality.

FIG. 6 illustrates a method of decoding according to an embodiment.

FIG. 7 illustrates a block diagram of a system within which aspects of the present embodiments may be implemented.

DETAILED DESCRIPTION

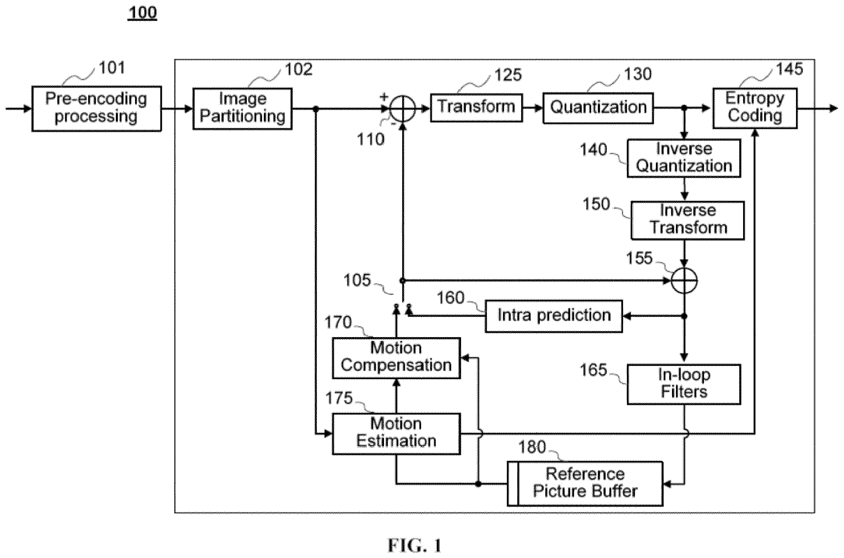

FIG. 1 illustrates an exemplary video encoder 100, such as a High Efficiency Video Coding (HEVC) encoder. FIG. 1 may also illustrate an encoder in which improvements are made to the HEVC standard or an encoder employing technologies similar to HEVC, such as a VVC (Versatile Video Coding) encoder under development by JVET (Joint Video Exploration Team).

In the present application, the terms "reconstructed" and "decoded" may be used interchangeably, the terms "encoded" or "coded" may be used interchangeably, and the terms "image", "picture" and "frame" may be used interchangeably. Usually, but not necessarily, the term "reconstructed" is used at the encoder side while "decoded" is used at the decoder side.

Before being encoded, the video sequence may go through pre-encoding processing (101), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata may be associated with the pre-processing, and attached to the bitstream.

In HEVC, to encode a video sequence with one or more pictures, a picture is partitioned (102) into one or more slices where each slice may include one or more slice segments. A slice segment is organized into coding units, prediction units, and transform units. The HEVC specification distinguishes between "blocks" and "units," where a "block" addresses a specific area in a sample array (e.g., luma, Y), and the "unit" includes the collocated blocks of all encoded color components (e.g., Y, Cb, Cr, or monochrome), syntax elements, and prediction data that are associated with the blocks (e.g., motion vectors).

For coding, a picture is partitioned into coding tree blocks (CTB) of square shape with a configurable size, and a consecutive set of coding tree blocks is grouped into a slice. A Coding Tree Unit (CTU) contains the CTBs of the encoded color components. A CTB is the root of a quadtree partitioning into Coding Blocks (CB), and a Coding Block may be partitioned into one or more Prediction Blocks (PB) and forms the root of a quadtree partitioning into Transform Blocks (TBs). Corresponding to the Coding Block, Prediction Block, and Transform Block, a Coding Unit (CU) includes the Prediction Units (PUs) and the tree-structured set of Transform Units (TUs), a PU includes the prediction information for all color components, and a TU includes residual coding syntax structure for each color component. The size of a CB, PB, and TB of the luma component applies to the corresponding CU, PU, and TU. In the present application, the term "block" may be used to refer, for example, to any of CTU, CU, PU, TU, CB, PB, and TB. In addition, the "block" may also be used to refer to a macroblock and a partition as specified in H.264/AVC or other video coding standards, and more generally to refer to an array of data of various sizes.

In the exemplary encoder 100, a picture is encoded by the encoder elements as described below. The picture to be encoded is processed in units of CUs. Each CU is encoded using either an intra or inter mode. When a CU is encoded in an intra mode, it performs intra prediction (160). In an inter mode, motion estimation (175) and compensation (170) are performed. The encoder decides (105) which one of the intra mode or inter mode to use for encoding the CU, and indicates the intra/inter decision by a prediction mode flag. Prediction residuals are calculated by subtracting (110) the predicted block from the original image block.

The prediction residuals are then transformed (125) and quantized (130). The quantized transform coefficients, as well as motion vectors and other syntax elements, are entropy coded (145) to output a bitstream. The encoder may also skip the transform and apply quantization directly to the non-transformed residual signal on a 4x4 TU basis. The encoder may also bypass both transform and quantization, i.e., the residual is coded directly without the application of the transform or quantization process. In direct PCM coding, no prediction is applied and the coding unit samples are directly coded into the bitstream.

The encoder decodes an encoded block to provide a reference for further predictions. The quantized transform coefficients are de-quantized (140) and inverse transformed (150) to decode prediction residuals. Combining (155) the decoded prediction residuals and the predicted block, an image block is reconstructed. In-loop filters (165) are applied to the reconstructed picture, for example, to perform deblocking/SAO (Sample Adaptive Offset) filtering to reduce encoding artifacts. The filtered image is stored at a reference picture buffer (180).

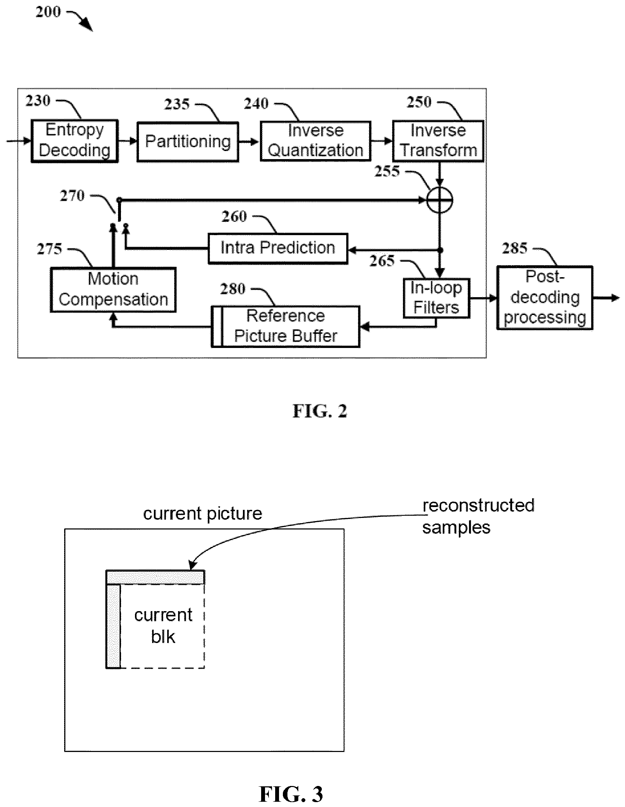

FIG. 2 illustrates a block diagram of an exemplary video decoder 200, such as an HEVC decoder. In the exemplary decoder 200, a bitstream is decoded by the decoder elements as described below. Video decoder 200 generally performs a decoding pass reciprocal to the encoding pass as described in FIG. 1, which performs video decoding as part of encoding video data. FIG. 2 may also illustrate a decoder in which improvements are made to the HEVC standard or a decoder employing technologies similar to HEVC, such as a VVC decoder.

In particular, the input of the decoder includes a video bitstream, which may be generated by video encoder 100. The bitstream is first entropy decoded (230) to obtain transform coefficients, motion vectors, picture partitioning information, and other coded information. The picture partitioning information indicates the size of the CTUs, and a manner a CTU is split into CUs, and possibly into PUs when applicable. The decoder may therefore divide (235) the picture into CTUs, and each CTU into CUs, according to the decoded picture partitioning information. The transform coefficients are de-quantized (240) and inverse transformed (250) to decode the prediction residuals.

Combining (255) the decoded prediction residuals and the predicted block, an image block is reconstructed. The predicted block may be obtained (270) from intra prediction (260) or motion-compensated prediction (i.e., inter prediction) (275). In case of bi-prediction, two motion compensated predictions may be combined with a weighted sum. In-loop filters (265) are applied to the reconstructed image. The filtered image is stored at a reference picture buffer (280).

The decoded picture can further go through post-decoding processing (285), for example, an inverse color transform (e.g., conversion from YCbCr 4:2:0 to RGB 4:4:4) or an inverse remapping performing the inverse of the remapping process performed in the pre-encoding processing (101). The post-decoding processing may use metadata derived in the pre-encoding processing and signaled in the bitstream.

The present disclosure is related to video coding using generalized bi-prediction (GBi). In Inter mode, the bi-prediction allows averaging two reference blocks for predicting a current block. GBi is a variant of bi-prediction allowing weighting the sum of the block prediction samples with different weights. The index of the weights referring to a pre-defined table of weights is encoded.

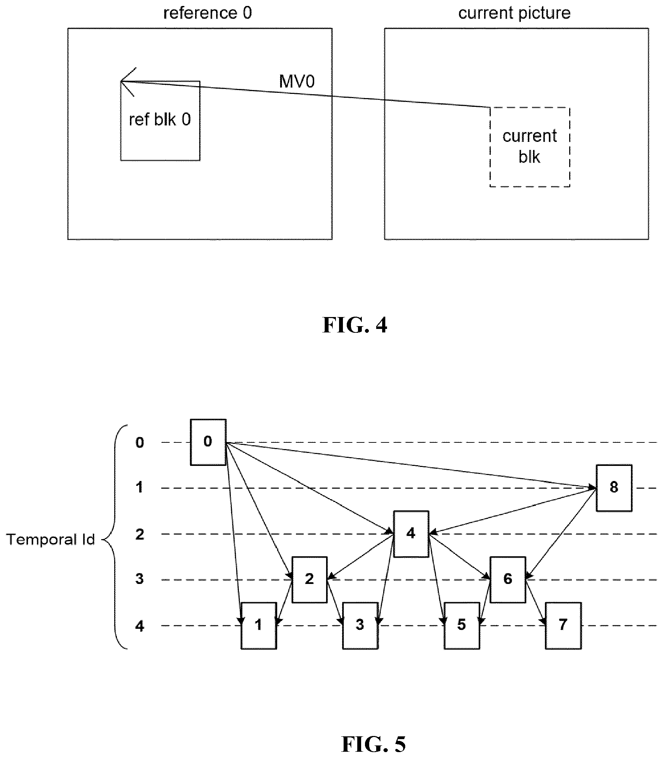

In block-based video coding scheme such as HEVC, intra and inter coding modes are used. In intra mode, the block prediction is computed using reconstructed samples of the current slice or picture (e.g. neighboring samples to the current block) as depicted in FIG. 3. In inter mode, the block prediction is computed from a motion compensated (MC) block of one reference picture that was previously reconstructed as depicted in FIG. 4.

Bi-prediction

In bi-prediction, two prediction blocks (Pred0 and Pred1) are computed using two reference pictures from two lists L0 and L1 respectively. The reference picture used to compute Pred0 has reference index ref0 in L0 and the reference picture used to compute Pred1 has reference index ref1 in L1. Next Pred0 and Pred1 are combined to form one single prediction block Predbi:

$$Predbi[x] = ( Pred0[x] + Pred1[x] + 1 ) >> 1 \qquad (1)$$

where x is a sample position in the current block.

Generalized bi-prediction

In generalized bi-prediction, the weights (w0 and w1) used for the combination are not necessarily equal to one:

$$PredGBi[x] = ( w0 \cdot Pred0[x] + w1 \cdot Pred1[x] + off ) / (w0 + w1) \qquad (2)$$

where off is a rounding offset.
In a variant, to facilitate the implementation, Eq. (2) is simplified as Eq. (3):

$$PredGBi[x] = ( w0 \cdot Pred0[x] + w1 \cdot Pred1[x] + 1 ) >> 1 \qquad (3)$$

In a variant, to facilitate the implementation, Eq. (2) is simplified as Eq. (3b):

$$PredGBi = ( w0\_num \cdot Pred0[x] + w1\_num \cdot Pred1[x] + 1 ) >> shift \qquad (3b)$$

where w0_num and w1_num are equal to (w0 << shift) and (w1 << shift), respectively, and shift = log2(w0+w1).
In an article by Yu-Chi Su et al., entitled "CE4.4.1: Generalized bi-prediction for inter coding", JVET document JVET-K0248, 11th Meeting, Ljubljana, SI, 10-18 July 2018 (hereinafter "JVET-K0248"), it is proposed to use indexed ("GBi_index") pre-defined weights. The syntax element GBi_index is coded for w1 (w0 can be deduced from w1 as w0 = 1-w1, or w0_num deduced from w1_num as w0_num = (1 <<shift) - w1_num), using fixed binarization (truncated unary coding) as depicted in example in Table 1:

**Table 1: Binarization of GBi index**

| GBi index | Weight value of $w_1$ | $w_1\_num$ | shift | Binarization of GBi index |
|-----------|------------------------|------------|-------|----------------------------|
| 0 | -1/4 | -1 | 2 | 0000 |
| 1 | 3/8 | 3 | 3 | 001 |
| 2 | 1/2 | 1 | 1 | 1 |
| 3 | 5/8 | 5 | 3 | 01 |
| 4 | 5/4 | 5 | 2 | 0001 |

The syntax element GBi_index is coded for each CU coded in inter bi-prediction, except in merge mode where the GBi_index is inferred from the GBi_index of the neighbor from which the current CU inherits certain parameters.
At the encoder side, all values of GBi_index and associated GBi weights are tested and the one that minimizes the encoding cost ("RD-cost" criterion) for the current CU is finally coded in the bitstream. Typically, the "RD-cost" measure is a Lagrangian function defined as:

$$RDcost = distortion + \lambda \cdot cost \qquad (4)$$

where "distortion" is a measure of the quality (e.g. L1-norm or L2-norm), "cost" is (an estimation of) the number of bits to encode the current CU and "λ" is the Lagrangian multiplier.
It turns out the probability distribution of GBi_index may vary depending on other parameters. Since the number of bits necessary to code GBi_index (see fifth column of Table 1) depends on the value of GBi_index, if the probability distribution of GBi_index does not match the binarization length, then the coding of GBi_index may be sub-optimal.

In JVET-K0248, the fixed binarization table of the GBi_index symbol has been determined by learning the optimal order on various test conditions, coding parameters and video sequences.

In the present embodiments, we attempt to improve the coding of the GBi weights used to predict a current CU. In particular, we may change the binarization table of the GBi index depending on other parameters related to the reference pictures.

Let's denote the two prediction blocks (i.e., predictors) as Predi and Predj (with (i,j) = (0,1) or (1,0)). Predi and Predj have been built with the reconstructed reference pictures Refi and Refj respectively.

We make the coding (e.g., binarization) of GBi_index dependent on (i.e., function of) other coding parameters. This is motivated by considering the following observations:

a) The equal weights (w0 = w1) are the most frequently used.

b) It turns out statistically that the probability of having weights with values closer to each other is higher than that of having weights with big asymmetry. For example, (5/8; 3/8) is more probable than (3/4; 1/4).

c) When the best weights (e.g., selected based on RD-cost criterion) are not equal ($w0 \neq w1$), it turns out statistically that the greater weight values are likely associated with Predi:

1. if the "quality(i)" of Refi is higher than the quality of Refj;

2. if the POC (Picture Order Count, indicating the picture display order) distance of Refi with the current picture is lower than the POC distance of Refj with the current picture, when Refi and Refj have same "quality(i)".

The term "quality(i)" of a reconstructed block of a reference image Refi is measured through an objective metric comparing the reconstructed block to its original version. It may be measured by using measurements such as, e.g., Peak Signal to Noise Ratio (PSNR), Mean Square Error (MSE), and etc. As described below, the present embodiments also use other readily available coding/decoding parameters to infer the quality of a reference image.

By giving different priorities to the properties (e.g., a, b, c above) we may derive different binarization tables for GBi_index. We give below some examples of binarization for GBi_index using different policy priorities and various table sizes. In particular, Table 2 follows the priorities in (a, b, c), Table 3 in (a, c, b), and Table 4 in (a, b, c).

Please note that the weighted values as shown in the tables are for example purposes, and they may take on other values. While the tables show a mapping from weighting values to GBi indices and binarization of the GBi indices, the GBi indices may take on different values from what are shown in the tables. The tables may also be regarded as a mapping directly between the weighted values and the binary code, without the consideration of the GBi indices at all. In the tables, all three priorities are considered. In some examples, fewer priorities may be used in performing the binarization. In the tables, truncated unary codes are used for binarization, however, other binarization methods may be used.

**Table 2: example of binarization of GBi index as a function of the "quality" of the predictions**

| quality(1) > quality(0) | | | quality(0) > quality(1) | | |
|---|---|---|---|---|---|
| GBi Index | Weight value of $w_1$ | Binarization of GBi Index | GBi Index | Weight value of $w_1$ | Binarization of GBi Index |
| 4 | -1/4 | 0000 | 4 | 5/4 | 0000 |
| 2 | 3/8 | 001 | 2 | 5/8 | 001 |
| 0 | 1/2 | 1 | 0 | 1/2 | 1 |
| 1 | 5/8 | 01 | 1 | 3/8 | 01 |
| 3 | 5/4 | 0001 | 3 | -1/4 | 0001 |

**Table 3: example of binarization of GBi index as a function of the "quality" of the predictions**

| quality(1) > quality(0) | | | quality(0) > quality(1) | | |
|---|---|---|---|---|---|
| GBi Index | Weight value of $w_1$ | Binarization of GBi Index | GBi Index | Weight value of $w_1$ | Binarization of GBi Index |
| 4 | -1/4 | 0000 | 4 | 5/4 | 0000 |

(continued)

| quality(1) > quality(0) | | | quality(0) > quality(1) | | |
|---|---|---|---|---|---|
| GBi Index | Weight value of $w_1$ | Binarization of GBi Index | GBi Index | Weight value of $w_1$ | Binarization of GBi Index |
| 2 | 5/8 | 001 | 2 | 3/8 | 001 |
| 0 | 1/2 | 1 | 0 | 1/2 | 1 |
| 1 | 5/4 | 01 | 1 | -1/4 | 01 |
| 3 | 3/8 | 0001 | 3 | 5/8 | 0001 |

**Table 4: example of binarization of GBi index as a function of the "quality" of the predictions**

| quality(1) > quality(0) | | | quality(0) > quality(1) | | |
|---|---|---|---|---|---|
| GBi Index | Weight value of $w_1$ | Binarization of GBi Index | GBi Index | Weight value of $w_1$ | Binarization of GBi Index |
| 6 | -1/4 | 000001 | 6 | 5/4 | 000001 |
| 4 | 1/4 | 00001 | 4 | 3/4 | 00001 |
| 2 | 3/8 | 001 | 2 | 5/8 | 001 |
| 0 | 1/2 | 1 | 0 | 1/2 | 1 |
| 1 | 5/8 | 01 | 1 | 3/8 | 01 |
| 3 | 3/4 | 0001 | 3 | 1/4 | 0001 |
| 5 | 5/4 | 00000 | 5 | -1/4 | 00000 |

Embodiment 1

When "quality" information is not explicitly available in the bitstream, it may be deduced or inferred from another parameter such as, e.g., the quantization parameter (QP) used to encode the reference picture. A lower QP usually means higher coding quality, when the video sequence characteristics are stationary. The QP value may be the slice QP (e.g., "slice_qp_delta" in HEVC) or the average QP value used by the CUs in the reference picture.

For example, in the above Table 2 to Table 4, the binarization depicted on the left will be used if the QP of the reference picture (1) is lower than the QP of the reference picture (0), indicating that the reference picture (1) has a higher coding quality than the reference picture (0). On the other hand, the binarization depicted on the right will be used if the QP of the reference picture (0) is lower than the QP of the reference picture (1), indicating that the reference picture (0) has a higher coding quality than the reference picture (1).

Embodiment 2

In another embodiment, the quality of a reference picture is inferred from the temporal identifier for the NAL unit (TiD) (e.g., *nuh_temporal_id_plus1* in HEVC). The TiD is associated with temporal scalability, as illustrated, e.g., in FIG. 5, the pictures at a temporal layer with the low time frequency having the lowest TiD and the pictures at a temporal layer with high frequency having the highest TiD values. In video streaming, the temporal scalability may be used to adapt the bit-rate to the channel bandwidth by dropping NAL units with highest TiD to reduce the bit-rate, but only the low time frequency pictures will be decoded in that case. Then the coding parameters would favor (e.g., lower QP values) the pictures of lower TiD since they are used as reference by the layers with higher TiD values, so that the TiD is a good indicator of the "quality" of the reconstructed picture.

Embodiment 3

In another embodiment, a closer reference picture is considered to provide higher quality. In particular, if abs(POCcur - POC1) < abs(POCcur - POC0), then the binarization of the highest weight values for w1 will be preferably associated with lower number of bits, as shown, e.g., on the left of Table 2 to Table 4 above. On the other hand, if abs(POCcur - POC0) < abs(POCcur - POC1), then the binarization of the highest weight values for w0 will be preferably associated with lower number of bits as shown, e.g., on the right of Table 2 to Table 4 above.

Embodiment 4

In another embodiment, the GBi_index or weight value is not coded, or the set of possible GBi weights is reduced when one or more of the following conditions are satisfied:

i) when at least one of the predictions has been built with a long-term reference picture, or when both the prediction blocks are built with long-term reference pictures;
ii) if the value of at least one of abs(POCcur - POCi) exceeds a threshold, or
iii) if the value of abs(POCcur - POCi) exceeds a threshold (N), where the threshold (N) is $N^{th}$ smallest value in the set $\{abs(POCcur - POC_k)\}_{k=1,..nb(L)}$ for at least one of the reference (List L0 or L1).

Embodiment 5

In a slice header (or a sequence header such as, e.g., SPS; or a picture header such as, e.g., PPS), a flag indicates if GBi is enabled and another flag (or the same flag) indicates if the present techniques apply (e.g., binarization of GBi_index as a function of another parameter).

Embodiment 6

In case QP spatially varies over the blocks, the QP of the location of $Pred_i$ in the reference image may be used. As $Pred_i$ is generally not aligned with a CU in the reference frame, the QP of the CU which contains the center of $Pred_i$ may be used for instance to estimate the quality. This requires performing motion compensation, which prevents the derivation of weights at the parsing stage. However, the parser may parse and store the bits related to GBi and the table for inverse binarization is derived later during reconstruction.

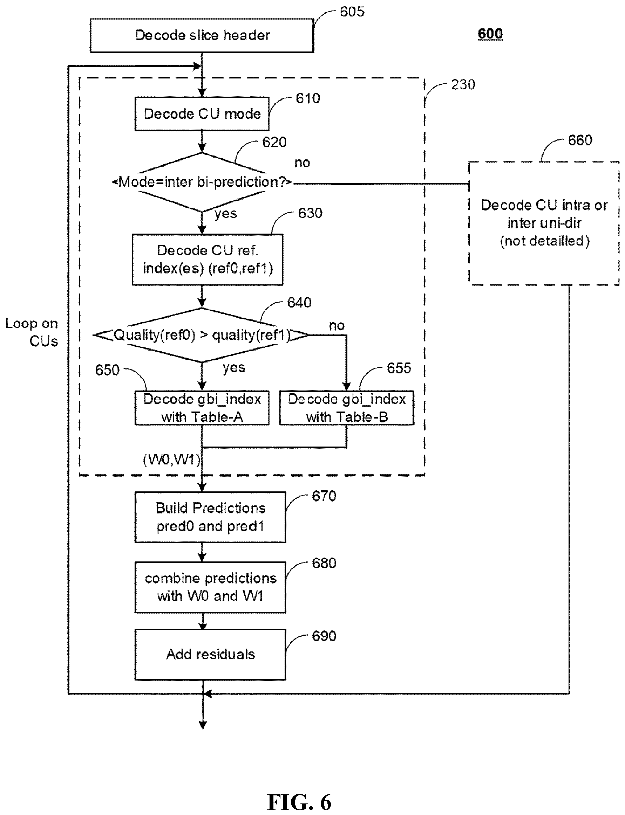

FIG. 6 illustrates a method (600) of decoding a block using generalized bi-prediction according to an embodiment. First, at 605 of FIG. 6, the slice header of an encoded video is decoded. As described previously, the slice header contains parameters which are suitable for use to determine the quality of a reference picture.

The coding mode of the current block is parsed at 610. If the coding mode is intra, or unidirectional inter (620), then the decoding process is unchanged at 660. If the mode is bi-predicational inter and if GBi is enabled, then the two reference indexes (ref0; ref1) of the reference picture lists L0 and L1 are decoded at 630.

If, at 640, the quality of the reference picture ref0 is higher than the quality of the reference picture corresponding to ref1, then the binarization Table-A is selected for parsing GBi_index at 650. Table-A uses less bins to encode GBi_index corresponding to w0 > w1 (e.g., the right of Table 2 to Table 4).

If on the other hand, at 640, the quality of the reference picture corresponding to ref1 is higher than the quality of the reference picture corresponding to ref0, then the binarization Table-B is selected for parsing GBi_index at 655. Table-B uses less bins to encode GBi_index corresponding to w1 > w0 (e.g., the left of Table 2 to Table 4).

The GBI weights (w0, w1) are derived from the mapping between the GBi index and the weight values. The mapping may be stored in one or more look-up tables that are known at the encoder or decoder a-priori as defined by the standard. Currently in VVC, there are two different tables of different size, one used for Random-Access configuration and the other one used for Low-Delay configuration.

Next, method 600 continues at 670, which builds predictions pred0 and pred1 for the current block with motion compensation. The predictions pred0 and pred1 are then weighted by w0 and w1, respectively, and combined (680) to obtain the resultant predictor. Then the residuals are added (690) to the resultant predictor to reconstruct the block. Also, as illustrated in FIG. 6, steps 610 to 655 may be performed by an entropy decoding block or function 230 as shown in the exemplary decoder 200 of FIG. 2.

At the encoder side, the GBi_index should be encoded corresponding to the decoding method shown in FIG. 6.

In the above, various embodiments are described with respect to bi-prediction at the CU level, assuming the PU (Prediction Unit) size is same as CU size as in current VVC. In the case one CU may contain several PU, the present technique may be applied at the PU level.

Various methods are described herein, and each of the methods comprises one or more steps or actions for achieving the described method. Unless a specific order of steps or actions is required for proper operation of the method, the order and/or use of specific steps and/or actions may be modified or combined.

Various methods and other aspects described in this application can be used to modify modules, for example, the, entropy coding, and/or decoding modules (145, 230), of a video encoder 100 and decoder 200 as shown in FIG. 1 and FIG. 2. Moreover, the present aspects are not limited to VVC or HEVC, and can be applied, for example, to other standards and recommendations, whether pre-existing or future-developed, and extensions of any such standards and recommendations (including VVC and HEVC). Unless indicated otherwise, or technically precluded, the aspects described in this application can be used individually or in combination.

Various numeric values are used in the present application, for example, different weight values and indices. The specific values are for example purposes and the aspects described are not limited to these specific values.

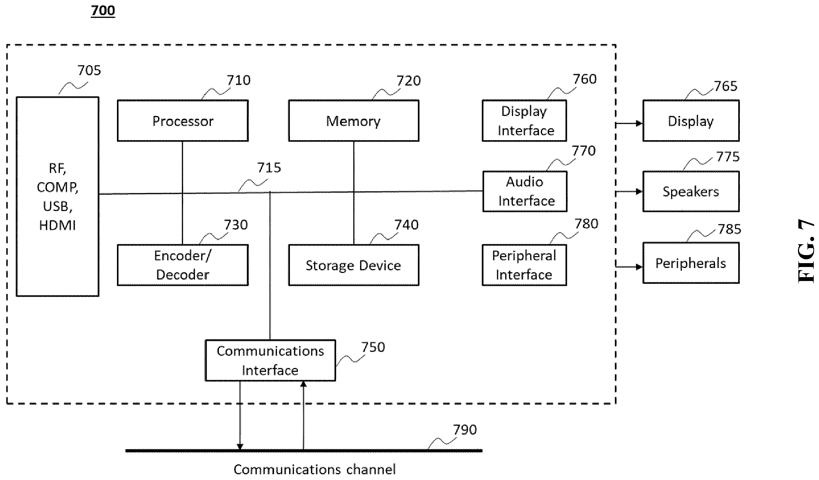

FIG. 7 illustrates a block diagram of an example of a system in which various aspects and embodiments are implemented. System 700 may be embodied as a device including the various components described below and is configured to perform one or more of the aspects described in this application. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 700, singly or in combination, may be embodied in a single integrated circuit, multiple ICs, and/or discrete components. For example, in at least one embodiment, the processing and encoder/decoder elements of system 700 are distributed across multiple ICs and/or discrete components. In various embodiments, the system 700 is communicatively coupled to other systems, or to other electronic devices, via, for example, a communications bus or through dedicated input and/or output ports. In various embodiments, the system 700 is configured to implement one or more of the aspects described in this application.

The system 700 includes at least one processor 710 configured to execute instructions loaded therein for implementing, for example, the various aspects described in this application. Processor 710 may include embedded memory, input output interface, and various other circuitries as known in the art. The system 700 includes at least one memory 720 (e.g., a volatile memory device, and/or a non-volatile memory device). System 700 includes a storage device 740, which may include non-volatile memory and/or volatile memory, including, but not limited to, EEPROM, ROM, PROM, RAM, DRAM, SRAM, flash, magnetic disk drive, and/or optical disk drive. The storage device 740 may include an internal storage device, an attached storage device, and/or a network accessible storage device, as non-limiting examples.

System 700 includes an encoder/decoder module 730 configured, for example, to process data to provide an encoded video or decoded video, and the encoder/decoder module 730 may include its own processor and memory. The encoder/decoder module 730 represents module(s) that may be included in a device to perform the encoding and/or decoding functions. As is known, a device may include one or both of the encoding and decoding modules. Additionally, encoder/decoder module 730 may be implemented as a separate element of system 700 or may be incorporated within processor 710 as a combination of hardware and software as known to those skilled in the art.

Program code to be loaded onto processor 710 or encoder/decoder 730 to perform the various aspects described in this application may be stored in storage device 740 and subsequently loaded onto memory 720 for execution by processor 710. In accordance with various embodiments, one or more of processor 710, memory 720, storage device 740, and encoder/decoder module 730 may store one or more of various items during the performance of the processes described in this application. Such stored items may include, but are not limited to, the input video, the decoded video or portions of the decoded video, the bitstream, matrices, variables, and intermediate or final results from the processing of equations, formulas, operations, and operational logic.

In several embodiments, memory inside of the processor 710 and/or the encoder/decoder module 730 is used to store instructions and to provide working memory for processing that is needed during encoding or decoding. In other embodiments, however, a memory external to the processing device (for example, the processing device may be either the processor 710 or the encoder/decoder module 730) is used for one or more of these functions. The external memory may be the memory 720 and/or the storage device 740, for example, a dynamic volatile memory and/or a non-volatile flash memory. In several embodiments, an external non-volatile flash memory is used to store the operating system of a television. In at least one embodiment, a fast external dynamic volatile memory such as a RAM is used as working memory for video coding and decoding operations, such as for MPEG-2, HEVC, or VVC (Versatile Video Coding).

The input to the elements of system 700 may be provided through various input devices as indicated in block 705. Such input devices include, but are not limited to, (i) an RF portion that receives an RF signal transmitted, for example, over the air by a broadcaster, (ii) a Composite input terminal, (iii) a USB input terminal, and/or (iv) an HDMI input terminal.

In various embodiments, the input devices of block 705 have associated respective input processing elements as known in the art. For example, the RF portion may be associated with elements suitable for (i) selecting a desired frequency (also referred to as selecting a signal, or band-limiting a signal to a band of frequencies), (ii) down converting the selected signal, (iii) band-limiting again to a narrower band of frequencies to select (for example) a signal frequency band which may be referred to as a channel in certain embodiments, (iv) demodulating the down converted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down converting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, down converting, and filtering again to a desired frequency band. Various embodiments rearrange the order of the above-described (and other) elements, remove some of these elements, and/or add other elements performing similar or different functions. Adding elements may include inserting elements in between existing elements, for example, inserting amplifiers and an analog-to-digital converter. In various embodiments, the RF portion includes an antenna.

Additionally, the USB and/or HDMI terminals may include respective interface processors for connecting system 700 to other electronic devices across USB and/or HDMI connections. It is to be understood that various aspects of input processing, for example, Reed-Solomon error correction, may be implemented, for example, within a separate input processing IC or within processor 710 as necessary. Similarly, aspects of USB or HDMI interface processing may be implemented within separate interface ICs or within processor 710 as necessary. The demodulated, error corrected, and demultiplexed stream is provided to various processing elements, including, for example, processor 710, and encoder/decoder 730 operating in combination with the memory and storage elements to process the datastream as necessary for presentation on an output device.

Various elements of system 700 may be provided within an integrated housing, Within the integrated housing, the various elements may be interconnected and transmit data therebetween using suitable connection arrangement 715, for example, an internal bus as known in the art, including the I2C bus, wiring, and printed circuit boards.

The system 700 includes communication interface 750 that enables communication with other devices via communication channel 790. The communication interface 750 may include, but is not limited to, a transceiver configured to transmit and to receive data over communication channel 790. The communication interface 750 may include, but is not limited to, a modem or network card and the communication channel 790 may be implemented, for example, within a wired and/or a wireless medium.

Data is streamed to the system 700, in various embodiments, using a Wi-Fi network such as IEEE 802.11. The Wi-Fi signal of these embodiments is received over the communications channel 790 and the communications interface 750 which are adapted for Wi-Fi communications. The communications channel 790 of these embodiments is typically connected to an access point or router that provides access to outside networks including the Internet for allowing streaming applications and other over-the-top communications. Other embodiments provide streamed data to the system 700 using a set-top box that delivers the data over the HDMI connection of the input block 705. Still other embodiments provide streamed data to the system 700 using the RF connection of the input block 705.

The system 700 may provide an output signal to various output devices, including a display 765, speakers 775, and other peripheral devices 785. The other peripheral devices 785 include, in various examples of embodiments, one or more of a stand-alone DVR, a disk player, a stereo system, a lighting system, and other devices that provide a function based on the output of the system 700. In various embodiments, control signals are communicated between the system 700 and the display 765, speakers 775, or other peripheral devices 785 using signaling such as AV.Link, CEC, or other communications protocols that enable device-to-device control with or without user intervention. The output devices may be communicatively coupled to system 700 via dedicated connections through respective interfaces 760, 770, and 780. Alternatively, the output devices may be connected to system 700 using the communications channel 790 via the communications interface 750. The display 765 and speakers 775 may be integrated in a single unit with the other components of system 700 in an electronic device, for example, a television. In various embodiments, the display interface 760 includes a display driver, for example, a timing controller (T Con) chip.

The display 765 and speaker 775 may alternatively be separate from one or more of the other components, for example, if the RF portion of input 705 is part of a separate set-top box. In various embodiments in which the display 765 and speakers 775 are external components, the output signal may be provided via dedicated output connections, including, for example, HDMI ports, USB ports, or COMP outputs.

Accordingly, the present embodiments provide for a first predictor and a second predictor which are used for forming a third predictor for a block in bi-prediction inter prediction, wherein the third predictor is obtained as a weighted average of the first and second predictors. The block may be a CU or PU. The first predictor is obtained using a first reference picture and the second predictor is obtained using a second reference picture. A first weight is applied to the first predictor, and a second weight is applied to the second predictor. The first weight is selected from a set of weight values, and the second weight is deduced from the first weight value.

Entropy coding or decoding of weight values the set of weight values is based on at least one of the following conditions: (1) whether two weight values are equal; (2) whether two weight values are closer than two weight values in another weight value pair; (3) whether quality of the first reference picture is higher than the second reference picture; and (4) whether the first reference picture is closer to a current picture than the second reference picture. A first weight, in the weight value pair with equal weights, is encoded with the shortest codeword by the entropy coding or decoding.

For each pair in the set of weight value pairs, only one weight in the pair is coded, and the other weight in the pair is derived from the coded weight in the pair. When two weight values in a weight value pair are closer than two weight values in another weight value pair, a first weight in the weight value pair is coded in a shorter codeword than a first weight in another weight value pair. When a weight to be coded in a weight value pair is equally close to a weight to be coded in another weight value pair, the codeword for the weight to be coded in the weight value pair and the codeword for the weight to be coded in another weight value pair depends on the quality of the reference pictures. A greater value or absolute value is assigned to a first weight for a first predictor, if the first reference picture has a higher quality than the second reference picture.

All or some of the above rules for assigning codewords to weight values may be applied in different orders. The quality of a reference picture can be measured by quantization parameter. The quality of a reference picture can also be measured by the temporal layer for a reference picture.

Present embodiments may include creating and/or transmitting and/or receiving and/or decoding a bitstream or signal that includes one or more of the described syntax elements, or variations thereof. The embodiments may also comprise a TV, set-top box, cell phone, tablet, or other electronic device that performs bi-prediction according to any of the embodiments described.

Present embodiments may also include a TV, set-top box, cell phone, tablet, or other electronic device that performs bi-prediction according to any of the embodiments described, and that displays (e.g. using a monitor, screen, or other type of display) a resulting image. Present embodiments may also include a TV, set-top box, cell phone, tablet, or other electronic device that tunes (e.g. using a tuner) a channel to receive a signal including an encoded image, and performs bi-prediction according to any of the embodiments described. Present embodiments may also include a TV, set-top box, cell phone, tablet, or other electronic device that receives (e.g. using an antenna) a signal over the air that includes an encoded image, and bi-prediction according to any of the embodiments described.

Furthermore, according to an embodiment, a method for video encoding is presented, comprising: obtaining a first predictor for a block of a picture using a first reference picture; obtaining a second predictor for the block of the picture using a second reference picture; using the first predictor and the second predictor for forming a third predictor for the block of the picture in bi-prediction inter prediction, wherein the third predictor is obtained as a weighted average of the first predictor and the second predictor by applying a first weight to the first predictor and applying a second weight to the second predictor, the first weight being selected from a set of weight values; and entropy coding the set of weight values based on whether picture quality of the first reference picture is higher than the second reference picture.

According to another embodiment, a method for video decoding is presented, comprising: obtaining a first predictor for a block of a picture using a first reference picture; obtaining a second predictor for the block of the picture using a second reference picture; using the first predictor and the second predictor for forming a third predictor for the block of the picture in bi-prediction inter prediction, wherein the third predictor is obtained as a weighted average of the first predictor and the second predictor by applying a first weight to the first predictor and applying a second weight to the second predictor, the first weight being selected from a set of weight values; and entropy decoding the set of weight values based on whether picture quality of the first reference picture is higher than the second reference picture.

According to another embodiment, an apparatus for video encoding is presented, comprising: means for obtaining a first predictor for a block of a picture using a first reference picture; means for obtaining a second predictor for the block of the picture using a second reference picture; means for using the first predictor and the second predictor for forming a third predictor for the block of the picture in bi-prediction inter prediction, wherein the third predictor is obtained as a weighted average of the first predictor and the second predictor by applying a first weight to the first predictor and applying a second weight to the second predictor, the first weight being selected from a set of weight values; and means for entropy coding the set of weight values based on whether picture quality of the first reference picture is higher than the second reference picture.

According to another embodiment, an apparatus for video decoding is presented, comprising: means for obtaining a first predictor for a block of a picture using a first reference picture; means for obtaining a second predictor for the block of the picture using a second reference picture; means for using the first predictor and the second predictor for forming a third predictor for the block of the picture in bi-prediction inter prediction, wherein the third predictor is obtained as a weighted average of the first predictor and the second predictor by applying a first weight to the first predictor and applying a second weight to the second predictor, the first weight being selected from a set of weight values; and means for entropy decoding the set of weight values based on whether picture quality of the first reference picture is higher than the second reference picture.

According to another embodiment, an apparatus for video encoding is presented, comprising one or more processors, wherein said one or more processors are configured to: obtain a first predictor for a block of a picture using a first reference picture; obtain a second predictor for the block of the picture using a second reference picture; use the first predictor and the second predictor for forming a third predictor for the block of the picture in bi-prediction inter prediction, wherein the third predictor is obtained as a weighted average of the first predictor and the second predictor by applying a first weight to the first predictor and applying a second weight to the second predictor, the first weight being selected from a set of weight values; and entropy code the set of weight values based on whether picture quality of the first reference picture is higher than the second reference picture. The apparatus may further comprise one or more memories coupled to said one or more processors.

According to another embodiment, an apparatus for video decoding is presented, comprising one or more processors, wherein said one or more processors are configured to obtain a first predictor for a block of a picture using a first reference picture; obtain a second predictor for the block of the picture using a second reference picture; use the first predictor and the second predictor for forming a third predictor for the block of the picture in bi-prediction inter prediction, wherein the third predictor is obtained as a weighted average of the first predictor and the second predictor by applying a first weight to the first predictor and applying a second weight to the second predictor, the first weight being selected from a set of weight values; and entropy decode the set of weight values based on whether picture quality of the first reference picture is higher than the second reference picture. The apparatus may further comprise one or more memories coupled to said one or more processors.

According to another embodiment, a signal comprising encoded video is formed by performing obtaining a first predictor for a block of a picture using a first reference picture; obtaining a second predictor for the block of the picture using a second reference picture; using the first predictor and the second predictor for forming a third predictor for the block of the picture in bi-prediction inter prediction, wherein the third predictor is obtained as a weighted average of the first predictor and the second predictor by applying a first weight to the first predictor and applying a second weight to the second predictor, the first weight being selected from a set of weight values; and entropy coding the set of weight values based on whether picture quality of the first reference picture is higher than the second reference picture.

According to an embodiment, the entropy coding or the entropy decoding the set of weight values is further based on whether two weight values in a weight value pair are equal.

According to an embodiment, the entropy coding or the entropy decoding the set of weight values is further based on whether the first reference picture is closer to a current picture than the second reference picture.

According to an embodiment, the entropy coding or the entropy decoding the set of weight values is further based on whether the first reference picture is closer to a current picture than the second reference picture.

According to an embodiment, the entropy coding or the entropy decoding the set of weight values assigns a greater value or greater absolute value to the first weight for the first predictor, if the first reference picture has a higher picture quality than the second reference picture.

According to an embodiment, the picture quality is determined by respective quantization parameter used to encode respective reference picture.

According to an embodiment, the picture quality of a reference picture is determined by a temporal identifier associated with the reference picture.

According to an embodiment, a shortest binarized codeword is assigned to the first weight for the entropy coding or the entropy decoding the set of weight values, when the first weight is equal to the second weight.

According to an embodiment, one of the first weight and the second weight is derived from the other weight and the one of the first weight and the second weight is represented by a binarized index into the set of weight values.

Additionally, an embodiment provides a computer program comprising instructions which when executed by one or more processors cause the one or more processors to perform the encoding method or decoding method according to any of the embodiments described above. One or more of the present embodiments also provide a computer readable storage medium having stored thereon instructions for encoding or decoding video data according to the methods described above. One or more embodiments also provide a computer readable storage medium having stored thereon a bitstream generated according to the methods described above. One or more embodiments also provide a method and apparatus for transmitting or receiving the bitstream generated according to the methods described above.

Various implementations involve decoding. "Decoding," as used in this application, may encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application may encompass all or part of the processes performed, for example, on an input video sequence in order to produce an encoded bitstream.

The implementations and aspects described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus, for example, a processor, which refers to processing devices in general, including, for example, a computer, a microprocessor, an integrated circuit, or a programmable logic device. Processors also include communication devices, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information may include one or more of, for example, estimating the information, calculating the information, predicting the information, or retrieving the information from memory.

Further, this application may refer to "accessing" various pieces of information. Accessing the information may include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of', for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

As will be evident to one of ordinary skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

**Claims**

1. A method for video encoding, comprising:

   obtaining a first predictor for a block of a picture using a first reference picture;
   obtaining a second predictor for the block of the picture using a second reference picture;
   using the first predictor and the second predictor for forming a third predictor for the block of the picture in bi-prediction inter prediction, wherein the third predictor is obtained as a weighted average of the first predictor and the second predictor by applying a first weight to the first predictor and applying a second weight to the second predictor, the first weight being selected from a set of weight values; and
   entropy coding the set of weight values based on whether picture quality of the first reference picture is higher than the second reference picture.

2. A method for video decoding, comprising:

   obtaining a first predictor for a block of a picture using a first reference picture;
   obtaining a second predictor for the block of the picture using a second reference picture;
   using the first predictor and the second predictor for forming a third predictor for the block of the picture in bi-prediction inter prediction, wherein the third predictor is obtained as a weighted average of the first predictor and the second predictor by applying a first weight to the first predictor and applying a second weight to the second predictor, the first weight being selected from a set of weight values; and
entropy decoding the set of weight values based on whether picture quality of the first reference picture is higher than the second reference picture.

3. An apparatus for video encoding, comprising:
one or more processors, wherein said one or more processors are configured to:

obtain a first predictor for a block of a picture using a first reference picture;
obtain a second predictor for the block of the picture using a second reference picture;
use the first predictor and the second predictor for forming a third predictor for the block of the picture in bi-prediction inter prediction, wherein the third predictor is obtained as a weighted average of the first predictor and the second predictor by applying a first weight to the first predictor and applying a second weight to the second predictor, the first weight being selected from a set of weight values; and
entropy code the set of weight values based on whether picture quality of the first reference picture is higher than the second reference picture.

4. An apparatus for video decoding, comprising:
one or more processors, wherein said one or more processors are configured to:

obtain a first predictor for a block of a picture using a first reference picture;
obtain a second predictor for the block of the picture using a second reference picture;
use the first predictor and the second predictor for forming a third predictor for the block of the picture in bi-prediction inter prediction, wherein the third predictor is obtained as a weighted average of the first predictor and the second predictor by applying a first weight to the first predictor and applying a second weight to the second predictor, the first weight being selected from a set of weight values; and
entropy decode the set of weight values based on whether picture quality of the first reference picture is higher than the second reference picture.

5. The method of claim 1 or 2, or the apparatus of claim 3 or 4, wherein the entropy coding or the entropy decoding the set of weight values is further based on whether two weight values in a weight value pair are equal.

6. The method of any one of claims 1, 2 and 5, or the apparatus of any one of claims 3-5, wherein the entropy coding or the entropy decoding the set of weight values is further based on whether two weight values in a weight value pair are closer than two weight values in another weight value pair.

7. The method of any one of claims 1, 2, 5 and 6, or the apparatus of any one of claims 3-6, wherein the entropy coding or the entropy decoding the set of weight values is further based on whether the first reference picture is closer to a current picture than the second reference picture.

8. The method of any one of claims 1, 2 and 5-7, or the apparatus of any one of claims 3-7, wherein the entropy coding or the entropy decoding the set of weight values assigns a greater value or greater absolute value to the first weight for the first predictor, if the first reference picture has a higher picture quality than the second reference picture.

9. The method of any one of claims 1, 2 and 5-8, or the apparatus of any one of claims 3-8, wherein the picture quality is determined by respective quantization parameter used to encode respective reference picture.

10. The method of any one of claims 1, 2 and 5-8, or the apparatus of any one of claims 3-8, wherein the picture quality of a reference picture is determined by a temporal identifier associated with the reference picture.

11. The method of any one of claims 1, 2 and 5-10, or the apparatus of any one of claims 3-10, wherein a shortest binarized codeword is assigned to the first weight for the entropy coding or the entropy decoding the set of weight values, when the first weight is equal to the second weight.

12. The method of any one of claims 1, 2 and 5-11, or the apparatus of any one of claims 3-11, wherein one of the first weight and the second weight is derived from the other weight and the one of the first weight and the second weight is represented by a binarized index into the set of weight values.

13. A non-transitory computer readable medium containing data content generated according to the apparatus of any one of claims 3-12, or by the method of any one of claims 1, 2 and 4-12, for playback using a processor.

14. A computer program product comprising computing instructions for performing the method of any one of claims 1, 2 and 5-12 when executed by one or more processors.

15. A signal comprising encoded video, formed by performing:

    obtaining a first predictor for a block of a picture using a first reference picture;
    obtaining a second predictor for the block of the picture using a second reference picture;
    using the first predictor and the second predictor for forming a third predictor for the block of the picture in bi-prediction inter prediction, wherein the third predictor is obtained as a weighted average of the first predictor and the second predictor by applying a first weight to the first predictor and applying a second weight to the second predictor, the first weight being selected from a set of weight values; and
    entropy coding the set of weight values based on whether picture quality of the first reference picture is higher than the second reference picture.

FIG. 1

**FIG. 2**

**FIG. 3**

reference 0

current picture

MV0

ref blk 0

current
blk

## FIG. 4

Temporal Id

0

1

2

3

4

0

8

4

2

6

1

3

5

7

## FIG. 5

**FIG. 6**

FIG. 7

Europäisches
Patentamt

European
Patent Office

Office européen
des brevets

# EUROPEAN SEARCH REPORT

Application Number

EP 18 30 6689

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/098079 A1 (CHUANG HSIAO-CHIANG [US] ET AL) 5 April 2018 (2018-04-05) | 1-4,7,8, 10,13-15 | INV. H04N19/13 H04N19/577 H04N19/154 H04N19/176 |
| Y | * paragraphs [0059], [0072], [0090], [0145] - [0163], [0184] - [0187] * | 5,6,11, 12 | |
| X | WO 2017/197146 A1 (VID SCALE INC [US]) 16 November 2017 (2017-11-16) | 13,15 | |
| Y | * paragraphs [0004] - [0008], [0056] - [0074]; figure 8 * | 5,6,11, 12 | |
| A | | 1-4,9 | |
| X | C-C CHEN ET AL: "Generalized bi-prediction for inter coding", 3. JVET MEETING; 26-5-2016 - 1-6-2016; GENEVA; (THE JOINT VIDEO EXPLORATION TEAM OF ISO/IEC JTC1/SC29/WG11 AND ITU-T SG.16 ); URL: HTTP://PHENIX.INT-EVRY.FR/JVET/,, no. JVET-C0047-v2, 28 May 2016 (2016-05-28), XP030150143, | 13,15 | |
| A | * the whole document * | 1-5 | |
| X | Y-C SU ET AL: "CE4-related: Generalized bi-prediction improvements combined from JVET-L0197 and JVET-L0296", 12. JVET MEETING; 20181003 - 20181012; MACAO; (THE JOINT VIDEO EXPLORATION TEAM OF ISO/IEC JTC1/SC29/WG11 AND ITU-T SG.16 ), , no. JVET-L0646 7 October 2018 (2018-10-07), XP030195262, Retrieved from the Internet: URL:http://phenix.int-evry.fr/jvet/doc_end _user/documents/12_Macao/wg11/JVET-L0646-v 5.zip [retrieved on 2018-10-07] | 13,15 | |
| A | * page 6 * | 1-4,8,10 | |

TECHNICAL FIELDS
SEARCHED (IPC)

H04N

The present search report has been drawn up for all claims

| Place of search | Date of completion of the search | Examiner |
|---|---|---|
| Munich | 7 March 2019 | Bergmann, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 30 6689

This annex lists the patent family members relating to the patent documents cited in  the above-mentioned European search report.
The members are as contained in the European Patent Office EDP file on
The European Patent Office is in no way liable for these particulars which are merely given for the purpose of information.

07-03-2019

| Patent document cited in search report | | Publication date | Patent family member(s) | | Publication date |
|---|---|---|---|---|---|
| US 2018098079 | A1 | 05-04-2018 | US | 2018098070 A1 | 05-04-2018 |
| | | | US | 2018098079 A1 | 05-04-2018 |
| | | | US | 2018098086 A1 | 05-04-2018 |
| | | | WO | 2018067729 A1 | 12-04-2018 |
| | | | WO | 2018067732 A1 | 12-04-2018 |
| | | | WO | 2018067733 A1 | 12-04-2018 |
| WO 2017197146 | A1 | 16-11-2017 | EP | 3456049 A1 | 20-03-2019 |
| | | | WO | 2017197146 A1 | 16-11-2017 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **YU-CHI SU et al.** CE4.4.1: Generalized bi-prediction for inter coding. *JVET document JVET-K0248, 11th Meeting,* 10 July 2018